# FASCICULE DE BREVET EUROPEEN

(11) **EP 3 165 875 B1**
(45) Date de publication et mention de la délivrance du brevet: **02.10.2019**
(21) Numéro de dépôt: 16197207.0
(22) Date de dépôt: 04.11.2016
(51) Int. Cl.: G01C 11/02, H04N 5/335

(54) **PROCEDE D'ACQUISITION D'IMAGES PAR UN INSTRUMENT OPTIQUE SPATIAL OU AEROPORTE AVEC CHAMP DE VISION ETENDU**
VERFAHREN ZUR BILDERFASSUNG MITHILFE EINES OPTISCHEN INSTRUMENTS FÜR DIE RAUMFAHRT ODER AN BORD EINES LUFTFAHRZEUGS MIT ERWEITERTEM SICHTFELD
METHOD FOR ACQUIRING IMAGES BY A SPACEBORNE OR AIRBORNE OPTICAL INSTRUMENT WITH EXTENDED FIELD OF VIEW

(30) Priorité: 06.11.2015 FR 1502339
(43) Date de publication de la demande: 10.05.2017
(73) Titulaire: Thales, 92400 Courbevoie (FR)
(72) Inventeur: PIGOUCHE, Olivier, 06130 GRASSE (FR); GAUCEL, Jean-Michel, 06210 MANDELIEU (FR); LIOTARD, Arnaud, 06130 GRASSE (FR)
(74) Mandataire: Priori, Enrico

(56) Documents cités:
- EP-A1- 3 013 047
- US-A1- 2001 019 361
- US-A1- 2009 245 688
- US-A1- 2009 268 985

## Description

L'invention porte sur un procédé d'acquisition d'images par un instrument optique spatial ou aéroporté, ainsi que sur un instrument optique et un système d'acquisition d'images pour la mise en oeuvre d'un tel procédé.

L'étendue du champ de vision d'un instrument optique spatial est limitée par les lois de l'optique. En effet, les performances d'un instrument optique sont optimales dans la direction de son axe optique (généralement dirigé vers le point nadir) et se dégradent au fur et à mesure que l'on s'écarte de cette direction ; au-delà d'un certain angle, la qualité de l'image devient insuffisante. Ainsi la couverture de régions étendues de la surface terrestre à l'aide de satellites d'observation en orbite basse ne peut s'effectuer qu'au moyen de passages multiples. Des remarques similaires s'appliquent au cas d'un instrument aéroporté.

Le document US 2001/0019361 décrit une caméra destinée à fonctionner à des faibles niveaux de lumière, présentant un champ de vision central et un champ de vision périphérique à résolution spatiale moindre.

Le document US 2009/245688 décrit un procédé d'acquisition d'images à partir d'une reconstruction multitrame. Les paramètres d'acquisition des images dépendent des images précédemment acquises, ce qui permet d'améliorer la résolution de l'image finale.

L'invention vise à surmonter cet inconvénient en proposant un procédé d'acquisition d'images multi-résolution avec champ de vision étendu. Pour ce faire, les inventeurs sont partis du constat que dans de nombreuses applications, comme par exemple la surveillance maritime, l'étendue du champ de vision est plus importante que la résolution spatiale. Ainsi, l'invention propose d'élargir le champ de vision d'un instrument spatial en dégradant la résolution spatiale sur les bords de l'image.

Un objet de l'invention est donc un procédé d'acquisition d'images par un instrument optique spatial ou aéroporté, comprenant les étapes suivantes :
a) acquisition, au moyen dudit instrument, d'une première image présentant un premier champ de vision comprenant la projection au sol de l'axe optique de l'instrument et délimitée par un premier bord de champ, ladite première image étant échantillonnée spatialement avec un premier pas d'échantillonnage ;
b) acquisition, au moyen de ce même instrument, d'une deuxième image présentant un deuxième champ de vision s'étendant au-delà du premier bord de champ, ladite deuxième image étant échantillonnée spatialement avec au moins un deuxième pas d'échantillonnage, ledit ou chaque dit deuxième pas d'échantillonnage étant supérieur audit premier pas d'échantillonnage.

Selon l'invention :
- Ledit premier pas d'échantillonnage est choisi de manière à définir une première fréquence spatiale de Nyquist telle que la fonction de transfert de modulation de l'instrument, ou un facteur de mérite proportionnel à ladite fonction de transfert de modulation, à ladite première fréquence de Nyquist soit supérieur ou égal à un seuil prédéfini sur tout ledit premier champ de vision ; et ledit ou chaque dit deuxième pas d'échantillonnage est choisi de manière à définir au moins une deuxième fréquence spatiale de Nyquist telle que ladite fonction de transfert de modulation, ou ledit facteur de mérite, à ladite ou à chaque dite deuxième fréquence de Nyquist, soit aussi supérieur ou égal audit seuil prédéfini sur tout ledit deuxième champ de vision.
- Ladite étape b) peut comprendre les sous-étapes suivantes :
   b1) acquisition de ladite deuxième image, échantillonnée avec un pas d'échantillonnage égal à celui de ladite première image ;
   b2) sous-échantillonnage ladite deuxième image.

Dans ce cas, lesdites première et deuxième images peuvent être acquises au moyen de capteurs pixélisés présentant des pixels de mêmes dimensions, correspondant au premier pas d'échantillonnage, le sous-échantillonnage de ladite deuxième image étant obtenu par un traitement de signal post-acquisition
- Selon un aspect de l'invention, lesdites première et deuxième images sont acquises au moyen de capteurs pixélisés présentant des pixels de dimensions différentes, les pixels du ou des capteurs utilisés pour l'acquisition de la deuxième image ayant des dimensions supérieures à celles des pixels du ou des capteurs utilisés pour l'acquisition de la première image, moyennant quoi le sous-échantillonnage de ladite deuxième image est obtenu en même temps que son acquisition.
- Ledit deuxième champ de vision peut entourer ledit premier champ de vision.
- Lesdites étapes a) et b) peuvent être mises en oeuvre au bord dudit vaisseau spatial, le procédé comprenant également une étape de transmission au sol des échantillons constituant lesdites première et deuxième images. Dans ce cas, le procédé peut comprendre également les étapes suivantes, mise en oeuvre au sol :
   c) sur-échantillonnage de ladite deuxième image à un troisième pas d'échantillonnage égal audit premier pas d'échantillonnage,
   d) obtention, à partir de la première image et de la deuxième image sur-échantillonnée, d'une image unique présentant un pas d'échantillonnage uniforme et comprenant une première région correspondant à ladite première image et une deuxième région correspondant à la partie de ladite deuxième image qui ne se superpose pas à ladite première image.

Un autre objet de l'invention est un instrument optique spatial ou aéroporté d'acquisition d'images, comprenant : un système optique de formation d'images ; un capteur ou ensemble de capteurs pour acquérir les images formées par ledit système optique ; et un processeur pour traiter les images acquises par ledit capteur ou ensemble de capteurs ; caractérisé en ce que ces éléments sont configurés pour mettre en oeuvre un tel procédé. Les capteurs peuvent notamment être de type CMOS et ledit processeur être au moins en partie co-intégré avec ledit ou au moins un desdits capteurs.

Un autre objet de l'invention est un instrument optique spatial ou aéroporté d'acquisition d'images comprenant : un système optique de formation d'images ; et un ensemble de capteurs pixélisés pour acquérir les images formées par ledit système optique ; caractérisé en ce que : ces éléments sont configurés pour acquérir, au moyen d'un ou plusieurs premiers capteurs dudit ensemble, une première image présentant un premier champ de vision comprenant la projection au sol de l'axe optique de l'instrument et délimitée par un premier bord de champ et, au moyen d'un ou plusieurs deuxièmes capteurs dudit ensemble, d'une deuxième image présentant un deuxième champ de vision s'étendant au-delà du premier bord de champ ; et en ce que : les pixels du ou des deuxièmes capteurs ont des dimensions supérieures à celles des pixels du ou des capteurs utilisés pour l'acquisition de la première image.

Encore un autre objet de l'invention est un système d'acquisition d'images adapté pour mettre en oeuvre un procédé tel que mentionné plus haut, comprenant :
- un segment spatial ou aérien comprenant un instrument optique tel que mentionné plus haut, ainsi qu'un dispositif de transmission adapté pour transmettre au sol des échantillons constituant une première et une deuxième image acquises par ledit instrument, ladite deuxième image ayant un champ de vision s'étendant au-delà d'un bord du champ de vision de la première image et étant échantillonnée spatialement avec au moins un pas d'échantillonnage supérieur à celui de la première image ; et
- un segment sol comprenant un dispositif de réception adapté pour recevoir lesdits échantillons et un système de traitement des données adapté pour : sur-échantillonner ladite deuxième image à un pas d'échantillonnage égal à celui de la première image, obtenir, à partir de la première image et de la deuxième image sur-échantillonnée, une image unique présentant un pas d'échantillonnage uniforme et comprenant une première région correspondant à ladite première image et une deuxième région correspondant à la partie de ladite deuxième image qui ne se superpose pas à ladite première image.

D'autres caractéristiques, détails et avantages de l'invention ressortiront à la lecture de la description faite en référence aux dessins annexés donnés à titre d'exemple et qui représentent, respectivement :
- Les figures 1A et 1B, des graphiques des fonctions de transfert de modulation tangentielles et sagittales d'un instrument optique pour différentes directions d'observations par rapport à l'axe optique ;
- La figure 2, un schéma d'un système de capteurs pour la mise en oeuvre d'un procédé selon un mode de réalisation de l'invention ;
- La figure 3, un schéma d'un système d'acquisition d'images selon un mode de réalisation de l'invention, comprenant un satellite équipé d'un instrument optique spatial et une station au sol ; et
- La figure 4, une image acquise par un procédé selon un mode de réalisation de l'invention.

L'invention sera décrite en référence au cas d'un instrument spatial, mais elle s'applique également à un instrument aéroporté.

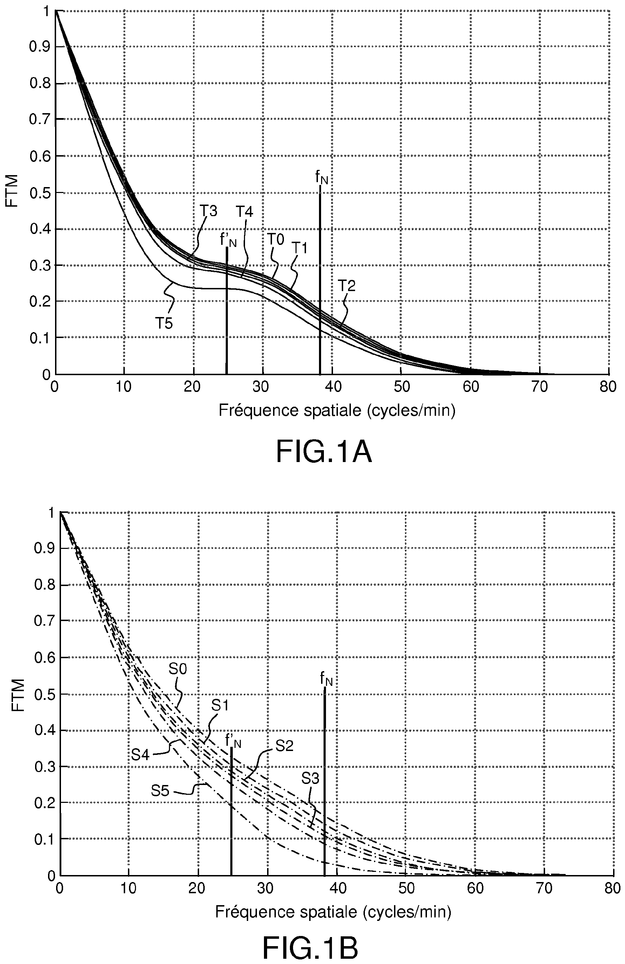

La figure 1A montre des graphiques de la fonction de transfert de modulation (FTM) tangentielle, exprimée en fonction de la fréquence spatiale, pour un instrument optique spatial ; la courbe T0 correspond à la FTM tangentielle mesurée pour un objet situé sur l'axe optique de l'instrument ; les courbes T1 - T5 correspondent à des valeurs croissantes de l'angle formé par la direction du point objet et l'axe optique (0,87°, 1,31°, 1,52°, 1,74° et 1,96°respectivement). La figure 1B montre les graphiques correspondants S0 - S5 de la FTM sagittale.

Aussi bien dans le cas tangentiel que sagittal, la FTM vaut 1 pour une fréquence spatiale nulle (cela ressort de la définition même de FTM), et décroit de manière monotone lorsque la fréquence spatiale augmente. La décroissance est d'autant plus rapide que l'angle entre la direction du point objet et l'axe optique est grand. Cela traduit le fait que les images sont d'autant moins nettes que l'on s'éloigne du centre du champ de vision.

Une image formée par un système optique est généralement acquise par un capteur pixélisé, qui peut typiquement être de type à couplage de charge (CCD, de l'anglais « Coupled Charge Device ») ou CMOS, qui réalise un échantillonnage spatial. Sur les figures, la référence f_{N} désigne la fréquence de Nyquist associée à cet échantillonnage qui, dans un souci de simplicité, est considérée identique dans les directions sagittale et tangentielle bien que cela ne soit pas nécessairement le cas en pratique. De manière conventionnelle, la limite du champ visuel « utile » est fixée de telle façon que la fonction de transfert de modulation à la fréquence de Nyquist soit supérieure ou égale à un seuil prédéfini TH (là aussi, on considère un seuil identique dans les deux directions bien que cela ne soit pas essentiel). Ainsi, par exemple, dans le cas des figures 1A et 1B on considère une fonction de Nyquist de 38 cycles/mm et un seuil TH=0,13. Dans ces conditions la largeur de champ, limitée par la FTM sagittale, vaut environ 0,87°. Parfois, le seuil n'est pas défini directement pour la FTM, mais pour un facteur de mérite qui lui est proportionnel, par exemple le produit de la FTM et de l'écart signal à bruit ; cela ne change pas fondamentalement le principe de l'invention.

Une idée à la base de l'invention est que la limite du champ visuel peut être repoussée vers des angles plus élevés à condition de baisser la fréquence de Nyquist. Ainsi, par exemple, si on prend une fréquence de Nyquist f'_{N} de 27 cycles/mm, la largeur du champ visuel qui permet de respecter le critère FTM(f'_{N})≥TH atteint 1,96°.

Plus précisément, l'invention propose d'acquérir deux images partielles :
- une première image, échantillonnée spatialement de manière fine, avec une fréquence de Nyquist f_{N}, et correspondant à un champ visuel « central » (0° - 0,87° dans le cas de l'exemple), incluant la projection au sol de l'axe optique de l'instrument (correspondant à un angle de 0°) et s'étendant jusqu'à un premier bord de champ (cercle à 0,87° dans l'exemple) qui correspond à la condition de seuil FTM(f_{N})=TH ; et
- au moins une deuxième image, échantillonné spatialement de manière moins fine, avec une fréquence de Nyquist f'_{N}<f_{N}, et correspondant à un champ visuel « étendu » ou « périphérique » qui s'étend au-delà du premier bord de champ et jusqu'à un deuxième bord de champ (0,87° - 1,96° dans le cas de l'exemple). De préférence, cette deuxième image n'inclut pas la projection au sol de l'axe optique de l'instrument.

La deuxième fréquence de Nyquist f'_{N} est choisie de telle sorte que la FTM (ou le facteur de mérite) soit supérieure au seuil TH dans la deuxième image, par exemple que la condition de seuil FTM(f'_{N}) soit satisfaite en correspondance du deuxième bord de champ.

Les conditions de seuil peuvent être imposées pour la FTM tangentielle uniquement, ou pour la FTM sagittale uniquement, ou bien pour les deux FTM à la fois, avec un même seuil ou des seuils différents. Il en va de même si on utilise un facteur de mérite proportionnel à la FTM.

Il est également possible d'acquérir plus de deux images partielles avec des fréquences de Nyquist décroissantes, et donc des résolutions spatiales d'autant moins bonnes que l'on s'éloigne de l'axe optique (pour mémoire, la résolution spatiale au sol est donnée par le pas d'échantillonnage dans le plan focal multiplié par l'altitude du satellite et divisé par la longueur focale de l'instrument).

Avantageusement, les images partielles peuvent correspondre à des régions adjacentes de la surface terrestre, de manière à former une image composite continue. En pratique, il peut y avoir un recouvrement partiel entre images partielles, qui est éliminé lors de la constitution de l'image composite.

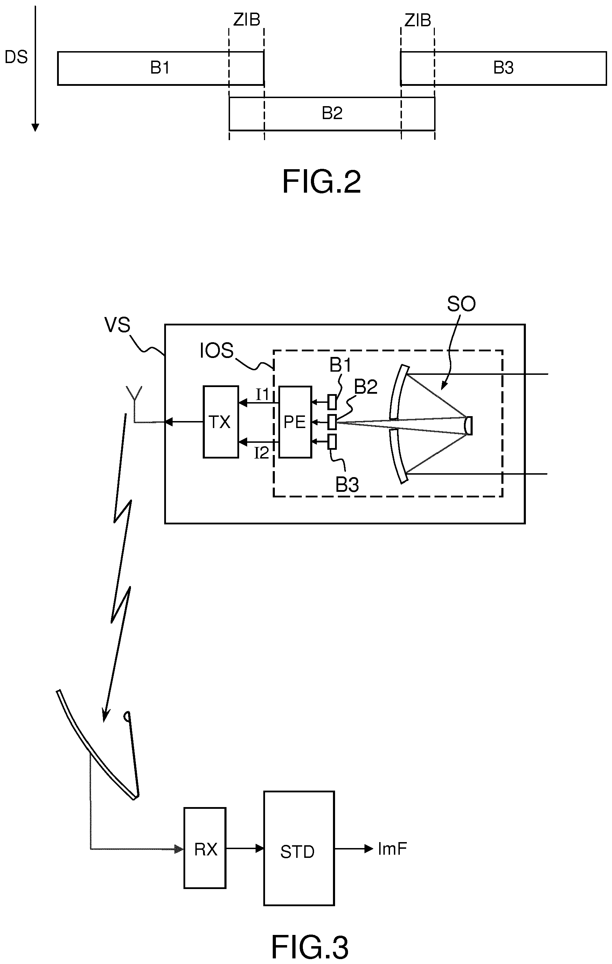

Très souvent, les instruments optiques spatiaux acquièrent des images ligne par ligne, dans une direction perpendiculaire à la direction d'avancement du satellite, au moyen de détecteurs de type barrette. Le déplacement du satellite permet l'acquisition d'images bidimensionnelles par balayage dans ladite direction d'avancement. La figure 2 illustre un tel agencement, dans le cas d'un détecteur à trois barrettes B1, B2 et B3 qui sont légèrement décalées dans la direction d'avancement du satellite (opposée à la direction DS de défilement du sol) et se recouvrent légèrement (zones inter-barrettes ZIB) pour éviter les trous de couverture. A titre d'exemple, la barrette centrale B2 peut être utilisée pour acquérir la première image partielle, correspondant à la région centrale du champ visuel, et les barrettes latérales B1, B3 pour acquérir deux imagés partielles à résolution réduite correspondant à des régions latérales du champ visuel. Selon l'art antérieur, seule la première image partielle serait acquise (il faut cependant comprendre que la représentation de la figure 2 est simplifiée, en réalité plusieurs barrettes seront généralement utilisées pour acquérir chaque image partielle).

Le sous-échantillonnage des images partielles latérales pourrait être obtenu en utilisant des barrettes B1, B3 présentant des pixels de plus grandes dimensions que ceux de la barrette B2. Cependant, il est généralement préférable d'utiliser des barrettes identiques et de réduire la résolution spatiale des barrettes B1 et B3 en procédant à un sous-échantillonnage des images. Ce sous-échantillonnage peut être réalisé, par exemple, par regroupement de pixels adjacents (« binning » en anglais), ce qui impose d'utiliser un rapport f_{N}/f'_{N} entier. De manière plus générale, on peut procéder à un filtrage spatial dans le plan focal suivi d'un sous-échantillonnage, ce qui permet de s'affranchir de cette contrainte. Il est même possible d'utiliser un pas de sous-échantillonnage dans le plan focal variable, de préférence de manière continue ; les images partielles latérales présentent alors plusieurs pas d'échantillonnage différents, tous plus grands que celui de l'image partielle centrale. L'idée est de faire diminuer la fréquence de Nyquist au fur et à mesure qu'on se rapproche du bord de champ de telle sorte que la FTM ou le facteur de mérite soit toujours supérieure, mais aussi proche que possible, du seuil TH. Dans ce cas, il faut procéder à un ré-échantillonnage au sol permettant de revenir à un pas constant pour exploiter l'image finale.

Il peut être avantageux d'utiliser des barrettes détectrices de type CMOS, car il est alors possible de co-intégrer l'électronique de sous-échantillonnage spatial, voire également d'autres fonctions électroniques (filtrage, conversion analogique - numérique, etc.).

Le sous-échantillonnage des images acquises par les barrettes B1 et B3 est préférentiellement effectué à bord du satellite (plus généralement du vaisseau spatial, et encore plus généralement du porteur - vaisseau spatial ou aéronef dans le cas d'un instrument aéroporté) sur lequel est embarqué l'instrument optique, afin de minimiser le volume de données à transmettre à une station au sol, où l'image composite finale est reconstituée. Afin que cette image finale soit homogène, et en particulier présente une échelle constante, il est nécessaire de sur-échantillonner les images partielles issues des barrettes B1, B3 de manière à revenir au même pas d'échantillonnage que pour l'image partielle issue de la barrette B2, ce qui résulte en un agrandissement compensant exactement le rétrécissement introduit par le sous-échantillonnage.

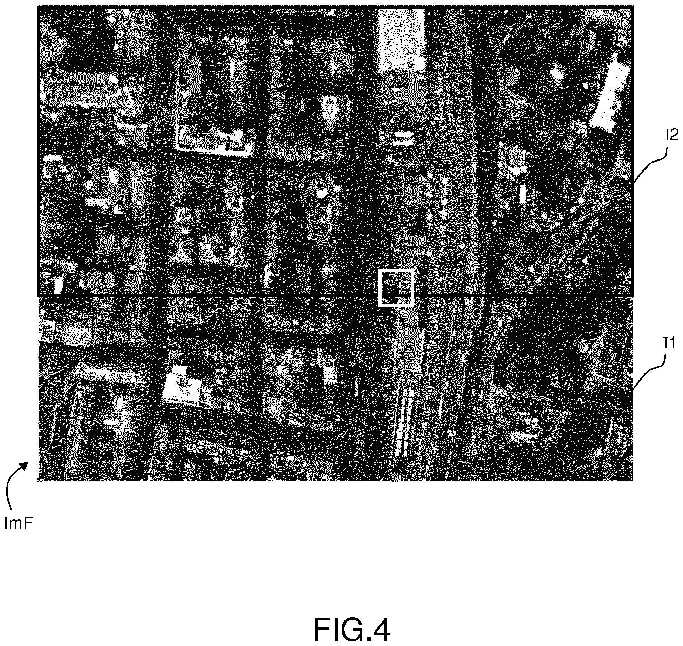

La figure 4 illustre une telle image composite finale ImF. On distingue aisément la première image I1 à « haute » résolution et la deuxième image I2 à plus basse résolution (sous-échantillonnage d'un facteur 4, puis sur-échantillonnage d'un même facteur). Selon l'art antérieur, seule l'image partielle I1 serait disponible. Or, il est clair que l'image partielle I2 - qui permet de plus que doubler le champ visuel - peut être utile dans de nombreuses applications, malgré sa résolution dégradée.

La figure 3 représente très schématiquement un système d'acquisition d'images pour la mise en oeuvre d'un procédé selon un mode de réalisation de l'invention. Le segment spatial comprend un vaisseau spatial porteur (typiquement un satellite) VS équipé d'un instrument optique IOS comprenant :
- Un système optique SO de formation d'images, par exemple un télescope. Comme cela a été expliqué plus haut, l'invention implique un élargissement du champ de vue, dont il faudra tenir compte lors de la conception du système optique SO. En particulier, certains composants, tels que des filtres spectraux, des miroirs, et plus généralement tous les composants au plan focal, devront être adaptés à cette plus grande largeur de champ, et seront donc de plus grandes dimensions par rapport aux composants correspondants dans un instrument ne mettant pas en oeuvre l'invention. Typiquement cet élargissement des composants se fait dans une seule direction, perpendiculaire à la direction d'avancement du porteur.
- Un ensemble de capteurs B1 ; B2, B3 pour acquérir les images formées par ledit système optique (cf. la figure 2).
- Un processeur embarqué PE pour traiter les images acquises par ces capteurs - en particulier pour sous-échantillonner les images acquises par les capteurs B1 et B3, et pour convertir les échantillons analogiques issus des capteurs en signaux numériques. Comme cela a été mentionné plus haut, ce processeur peut être totalement ou partiellement (en particulier en ce qui concerne les fonctions de sous-échantillonnage) co-intégré avec un ou plusieurs détecteurs. Le terme « processeur » doit être interprété au sens large de système électronique permettant de traiter des signaux ; il peut être analogique, numérique ou hybride numérique - analogique. Il peut s'agir d'un circuit dédié ou d'un microprocesseur exécutant un programme spécifique, stocké dans une mémoire non-volatile.
- Un émetteur TX pour transmettre au sol les signaux représentatif des images acquises par les capteurs et traités par le processeur.

Le processeur peut être absent si le sous-échantillonnage est obtenu en même temps que l'acquisition des images latérales grâce à l'utilisation de capteurs B1, B3 présentant des pixels de plus grandes dimensions que ceux de la barrette B2.

Le segment sol comprend un récepteur RX pour recevoir les signaux émis par l'émetteur TX et un système de traitement des données STD (typiquement un ordinateur, ou un système informatique comprenant plusieurs ordinateurs, programmé de manière opportune) pour constituer l'image finale multi-résolution ImF à partir de ces signaux.

Dans le cas d'un système aéroporté, évidemment, on ne parlera pas de « segment spatial » mais plutôt de « segment aérien ».

## Revendications

1. Procédé d'acquisition d'images par un instrument optique (IOS) spatial ou aéroporté, comprenant les étapes suivantes :
a) acquisition, au moyen dudit instrument, d'une première image (I1) présentant un premier champ de vision et délimitée par un premier bord de champ, ladite première image étant échantillonnée spatialement avec un premier pas d'échantillonnage ;
b) acquisition, au moyen de ce même instrument, d'une deuxième image (I2) présentant un deuxième champ de vision s'étendant au-delà du premier bord de champ, ladite deuxième image étant échantillonnée spatialement avec au moins un deuxième pas d'échantillonnage, ledit ou chaque dit deuxième pas d'échantillonnage étant supérieur audit premier pas d'échantillonnage,
**caractérisé en ce que** le premier champ de vision comprend la projection au sol de l'axe optique de l'instrument et **en ce que** ledit premier pas d'échantillonnage est choisi de manière à définir une première fréquence spatiale de Nyquist (f_{N}) telle que la fonction de transfert de modulation de l'instrument, ou un facteur de mérite proportionnel à ladite fonction de transfert de modulation, à ladite première fréquence de Nyquist soit supérieur ou égal à un seuil (TH) prédéfini sur tout ledit premier champ de vision ; et ledit ou chaque dit deuxième pas d'échantillonnage est choisi de manière à définir au moins une deuxième fréquence spatiale de Nyquist (f'_{N}) telle que ladite fonction de transfert de modulation, ou ledit facteur de mérite, à ladite ou à chaque dite deuxième fréquence de Nyquist, soit aussi supérieur ou égal audit seuil prédéfini sur tout ledit deuxième champ de vision.

2. Procédé selon la revendication 1 dans lequel ladite étape b) comprend les sous-étapes suivantes :
b1) acquisition de ladite deuxième image, échantillonnée avec un pas d'échantillonnage égal à celui de ladite première image ;
b2) sous-échantillonnage de ladite deuxième image.

3. Procédé selon la revendication 2 dans lequel lesdites première et deuxième images sont acquises au moyen de capteurs pixélisés (B1, B2, B3) présentant des pixels de mêmes dimensions, correspondant au premier pas d'échantillonnage, le sous-échantillonnage de ladite deuxième image étant obtenu par un traitement de signal post-acquisition.

4. Procédé selon la revendication 1 dans lequel lesdites première et deuxième images sont acquises au moyen de capteurs pixélisés (B1, B2, B3) présentant des pixels de dimensions différentes, les pixels du ou des capteurs utilisés pour l'acquisition de la deuxième image ayant des dimensions supérieures à celles des pixels du ou des capteurs utilisés pour l'acquisition de la première image, moyennant quoi le sous-échantillonnage de ladite deuxième image est obtenu en même temps que son acquisition.

5. Procédé selon l'une des revendications précédentes dans lequel ledit deuxième champ de vision entoure ledit premier champ de vision.

6. Procédé selon l'une des revendications précédentes dans lequel ledit instrument optique est embarqué à bord d'un vaisseau spatial (VS) et lesdites étapes a) et b) sont mises en oeuvre au bord dudit vaisseau spatial, le procédé comprenant également une étape de transmission au sol des échantillons constituant lesdites première et deuxième images.

7. Procédé selon la revendication 6 comprenant également les étapes suivantes, mise en oeuvre au sol :
c) sur-échantillonnage de ladite deuxième image à un troisième pas d'échantillonnage égal audit premier pas d'échantillonnage,
d) obtention, à partir de la première image et de la deuxième image sur-échantillonnée, d'une image unique (ImF) présentant un pas d'échantillonnage uniforme et comprenant une première région correspondant à ladite première image et une deuxième région correspondant à la partie de ladite deuxième image qui ne se superpose pas à ladite première image.

8. Instrument optique spatial ou aéroporté d'acquisition d'images, comprenant :
- un système optique (SO) de formation d'images ;
- un capteur ou ensemble de capteurs (B1, B2, B3) pour acquérir les images formées par ledit système optique ; et
- un processeur (PE) pour traiter les images acquises par ledit capteur ou ensemble de capteurs ;
**caractérisé en ce que** ces éléments sont configurés pour mettre en oeuvre un procédé selon l'une des revendications précédentes.

9. Instrument selon la revendication 8 dans lequel ledit ou lesdits capteurs sont de type CMOS et ledit processeur est au moins en partie co-intégré avec ledit ou au moins un desdits capteurs.

10. Instrument optique spatial ou aéroporté d'acquisition d'images pour mettre en oeuvre un procédé selon la revendication 4, comprenant :
- un système optique (SO) de formation d'images ; et
- un ensemble de capteurs pixélisés (B1, B2, B3) pour acquérir les images formées par ledit système optique comprenant un ou plusieurs premiers capteurs dudit ensemble (B2) et un ou plusieurs deuxièmes capteurs dudit ensemble (B1, B3) ;
**caractérisé en ce que** :
- ces éléments sont configurés pour acquérir, au moyen d'un ou plusieurs premiers capteurs dudit ensemble (B2), une première image (I1) présentant un premier champ de vision comprenant la projection au sol de l'axe optique de l'instrument et délimitée par un premier bord de champ et, au moyen d'un ou plusieurs deuxièmes capteurs (B1, B3) dudit ensemble, d'une deuxième image (I2) présentant un deuxième champ de vision s'étendant au-delà du premier bord de champ ; et **en ce que** :
- les pixels du ou des deuxièmes capteurs ont des dimensions supérieures à celles des pixels du ou des capteurs utilisés pour l'acquisition de la première image.

11. Système d'acquisition d'images adapté pour mettre en oeuvre un procédé selon l'une des revendications 6 ou 7, comprenant :
- un segment spatial ou aérien comprenant un instrument optique selon l'une des revendications 8 à 10, ainsi qu'un dispositif de transmission (TX) adapté pour transmettre au sol des échantillons constituant une première et une deuxième image acquises par ledit instrument, ladite deuxième image ayant un champ de vision s'étendant au-delà d'un bord du champ de vision de la première image et étant échantillonnée spatialement avec au moins un pas d'échantillonnage supérieur à celui de la première image ; et
- un segment sol comprenant un dispositif de réception (RX) adapté pour recevoir lesdits échantillons et un système de traitement des données (STD) adapté pour :
- sur-échantillonner ladite deuxième image à un pas d'échantillonnage égal à celui de la première image,
- obtenir, à partir de la première image et de la deuxième image sur-échantillonnée, une image unique (ImF) présentant un pas d'échantillonnage uniforme et comprenant une première région correspondant à ladite première image et une deuxième région correspondant à la partie de ladite deuxième image qui ne se superpose pas à ladite première image.

## Patentansprüche

1. Verfahren zur Bilderfassung mithilfe eines optischen Instruments (10S) für die Raumfahrt oder an Bord eines Luftfahrzeugs, folgende Schritte beinhaltend:
a) Erfassung, mithilfe des Instruments, eines ersten Bildes (I1), welches ein erstes Sichtfeld darstellt und durch einen ersten Feldrand begrenzt wird, wobei das erste Bild räumlich mit einem ersten Abtastschritt abgetastet wird;
b) Erfassung, mithilfe desselben Instruments, eines zweiten Bildes (I2), welches ein zweites Sichtfeld darstellt, welches sich über den ersten Feldrand hinaus erstreckt, wobei das zweite Bild räumlich mit mindestens einem zweiten Abtastschritt abgetastet wird, wobei der oder jeder Abtastschritt größer als der erste Abtastschritt ist,
**dadurch gekennzeichnet, dass** das erste Sichtfeld die Projektion am Boden der optischen Achse des Instrumentes enthält, und dadurch, dass der erste Abtastschritt so gewählt ist, dass eine erste räumliche Nyquist-Frequenz (f_{N}) in einer Weise definiert wird, dass die Modulations-Übertragungsfunktion des Instrumentes, oder ein zu dieser Modulations-Übertragungsfunktion proportionaler Gütefaktor bei der ersten Nyquist-Frequenz gleich einem für das gesamte erste Sichtfeld vorbestimmten Schwellenwert (TH) oder größer als dieser ist; und dass der zweite Abtastschritt so gewählt ist, dass er mindestens eine zweite räumliche Nyquist-Frequenz (f'_{N}) in einer Weise definiert, dass die Modulations-Übertragungsfunktion oder der Gütefaktor bei der oder jeder zweiten Nyquist-Frequenz ebenfalls größer als der für das gesamte Sichtfeld vorbestimmte Schwellenwert oder gleich diesem ist.

2. Verfahren nach Anspruch 1, bei welchem der Schritt b) folgende Unterschritte beinhaltet:
b1) Erfassen des zweiten Bildes, welches mit einem Abtastschritt gleich demjenigen des ersten Bildes abgetastet wird;
b2) Abwärtsabtasten des zweiten Bildes.

3. Verfahren nach Anspruch 2, bei welchem das erste und das zweite Bild mithilfe von gepixelten Sensoren (B1, B2, B3) erfasst werden, welche Pixel gleicher Abmessungen aufweisen, welche dem ersten Abtastschritt entsprechen, wobei das Abwärtsabtasten des zweiten Bildes durch eine Verarbeitung des Signals nach der Erfassung erzielt wird.

4. Verfahren nach Anspruch 1, bei welchem das erste und das zweite Bild mithilfe von gepixelten Sensoren (B1, B2, B3) erfasst werden, welche Pixel unterschiedlicher Abmessungen aufweisen, wobei die Pixel des oder der zur Erfassung des zweiten Bildes eingesetzten Sensors/Sensoren größere Abmessungen besitzen, wodurch das Abwärtsabtasten des zweiten Bildes gleichzeitig mit seiner Erfassung erzielt wird.

5. Verfahren nach einem der vorhergehenden Ansprüche, bei welchem das zweite Sichtfeld das erste Sichtfeld umgibt.

6. Verfahren nach einem der vorhergehenden Ansprüche, bei welchem das optische Instrument an Bord eines Raumfahrzeugs (VS) mitgeführt wird und die Schritte a) und b) an Bord des Raumfahrzeugs umgesetzt werden, wobei das Verfahren ebenfalls einen Schritt der Übertragung an den Boden der Abtastwerte beinhaltet, welche das erste und das zweite Bild bilden.

7. Verfahren nach Anspruch 6, welches ebenfalls folgende, am Boden umgesetzte Schritte beinhaltet:
c) Aufwärtsabtasten des zweiten Bildes mit einem dritten Abtastschritt, welcher gleich dem ersten Abtastschritt ist,
d) Erzielen, anhand des ersten Bildes und des zweiten, aufwärts abgetasteten Bildes, eines einzigen Bildes (ImF), welches einen einheitlichen Abtastschritt aufweist und einen ersten Bereich beinhaltet, welcher demjenigen Teil des zweiten Bildes entspricht, welcher das erste Bild nicht überlagert.

8. Optisches Instrument zur Bilderfassung für die Raumfahrt oder an Bord eines Luftfahrzeugs, Folgendes beinhaltend:
- ein optisches System (SO) zur Bilderzeugung;
- einen Sensor oder eine Gruppe von Sensoren (B1, B2, B3) zum Erfassen der durch das optische System erzeugten Bilder; und
- einen Prozessor (PE) zum Verarbeiten der durch den Sensor oder die Gruppe von Sensoren erfassten Bilder;
**dadurch gekennzeichnet, dass** diese Elemente konfiguriert sind, um das Verfahren nach einem der vorhergehenden Ansprüche umzusetzen.

9. Instrument nach Anspruch 8, bei welchem der oder die Sensor(en) Sensor(en) vom Typ CMOS ist/sind und der Prozessor mindestens teilweise mit dem oder den Sensor(en) kointegriert ist.

10. Optisches Instrument zur Bilderfassung für die Raumfahrt oder an Bord eines Luftfahrzeugs zum Umsetzen des Verfahrens nach Anspruch 4, Folgendes beinhaltend:
- ein optisches System (SO) zur Bilderzeugung; und
- eine Gruppe von gepixelten Sensoren (B1, B2, B3) zum Erfassen der durch das optische System erzeugten Bilder, beinhaltend einen oder mehrere erste(n) Sensor(en) der Gruppe (B2) und einen oder mehrere zweite(n) Sensor(en) der Gruppe (B1, B3)
**dadurch gekennzeichnet, dass**:
- diese Elemente konfiguriert sind, um mithilfe eines ersten Sensors oder mehrerer erster Sensoren der Gruppe (B2) ein erstes Bild (11) zu erfassen, welches ein erstes Sichtfeld darstellt, welches die Projektion am Boden der optischen Achse des Instrumentes enthält und durch einen ersten Feldrand begrenzt ist und, mithilfe eines zweiten Sensors oder mehrerer zweiter Sensoren (B1, B3) der Gruppe, ein zweites Bild (12) zu erfassen, welches ein zweites Sichtfeld darstellt, welches sich über den ersten Feldrand hinaus erstreckt; und dadurch, dass:
- die Pixel des zweiten Sensors oder der zweiten Sensoren größere Abmessungen als diejenige der Pixel des oder der zur Erfassung des ersten Bildes verwendeten Sensors/Sensoren besitzen.

11. Bilderfassungssystem, welches zur Umsetzung des Verfahrens nach einem der Ansprüche 6 oder 7 geeignet ist, Folgendes beinhaltend:
- ein Raum- oder Luftsegment, welches ein optisches Instrument nach einem der Ansprüche 8 bis 10 sowie eine Übertragungsvorrichtung (TX) beinhaltet, welche geeignet ist, um Abtastwerte an den Boden zu übertragen, welche ein erstes und ein zweites Bild bilden, welche durch das Instrument erfasst wurden, wobei das zweite Bild ein Sichtfeld besitzt, welches sich über den Sichtfeldrand des ersten Bildes erstreckt und räumlich mit mindestens einem Abtastschritt abgetastet wird, welcher größer als derjenige des ersten Bildes ist; und
- ein Bodensegment, welches eine Empfangsvorrichtung (RX) beinhaltet, welche geeignet ist, um die Abtastwerte zu empfangen, und ein Datenverarbeitungssystem (STD), welches sich für folgende Schritte eignet:
- Aufwärtsabtasten des zweiten Bildes mit einem Abtastschritt gleich demjenigen des ersten Bildes;
- Erzielen, anhand des ersten Bildes und des zweiten, aufwärts abgetasteten Bildes, eines einzigen Bildes (ImF), welches einen einheitlichen Abtastschritt aufweist und einen ersten Bereich beinhaltet, welcher demjenigen Teil des zweiten Bildes entspricht, welcher das erste Bild nicht überlagert.

## Claims

1. Method for acquisition of images by a space or airborne optical instrument (IOS), comprising the following steps:
a) acquisition, by means of said instrument, of a first image (I1) having a first field of view and delimited by a first field edge, said first image being sampled spatially with a first sampling step;
b) acquisition, by means of this same instrument, of a second image (12) having a second field of view extending beyond the first field edge, said second image being sampled spatially with at least one second sampling step, said or each said second sampling step being greater than said first sampling step.
**characterized in that** the first field of view comprises projecting on the ground of the optical axis of the instrument and **in that** first sampling step is chosen so as to define a first Nyquist spatial frequency (f_{N}) such that the modulation transfer function of the instrument, or a figure or merit proportional to said modulation transfer function, at said first Nyquist frequency is greater than or equal to a predefined threshold (TH) over all said first field of view; and said or each said second sampling step is chosen so as to define at least one second Nyquist spatial frequency (f'_{N}) such that said modulation transfer function, or said figure of merit, at said or at each said second Nyquist frequency, is also greater than or equal to said predefined threshold over all said second field of view.

2. Method according to claim 1, in which said step b) comprises the following substeps:
b1) acquisition of said second image, sampled with a sampling step equal to that of said first image;
b2) downsampling of said second image.

3. Method according to Claim 2, in which said first and second images are acquired by means of pixelated sensors (B1, B2, B3) having pixels of the same dimensions, corresponding to the first sampling step, the downsampling of said second image being obtained by a post-acquisition signal processing.

4. Method according to Claim 1, in which said first and second images are acquired by means of pixelated sensors (B1, B2, B3) having pixels of different dimensions, the pixels of the sensor or sensors used for the acquisition of the second image having dimensions greater than those of the pixels of the sensor or sensors used for the acquisition of the first image, whereby the downsampling of said second image is obtained at the same time as the acquisition thereof.

5. Method according to one of the preceding claims, in which said second field of view surrounds said first field of view.

6. Method according to one of the preceding claims, in which said optical instrument is embedded on board a spacecraft (VS) and said steps a) and b) are implemented on board said spacecraft, the method also comprising a step of transmission to the ground of the samples forming said first and second images.

7. Method according to Claim 6, also comprising the following steps, implemented on the ground:
c) upsampling of said second image with a third sampling step equal to said first sampling step,
d) obtaining, from the first image and from the upsampled second image, of a single image (ImF) having a uniform sampling step and comprising a first region corresponding to said first image and a second region corresponding to the part of said second image which is not superimposed on said first image.

8. Space or airborne optical instrument for the acquisition of images, comprising:
- an image-forming optical system (SO);
- a sensor or set of sensors (B1, B2, B3) for acquiring the images formed by said optical system; and
- a processor (PE) for processing the images acquired by said sensor or set of sensors;
**characterized in that** these elements are configured to implement a method according to one of the preceding claims.

9. Instrument according to Claim 8, in which said sensor or sensors are of CMOS type and said processor is at least partly co-integrated with said or at least one of said sensors.

10. Space or airborne optical instrument for the acquisition of images for implementing a method according to Claim 4, comprising:
- an image-forming optical system (SO); and
- a set of pixelated sensors (B1, B2, B3) for acquiring the images formed by said optical system comprising on or more first sensors of said set (B2) and one or more second sensors of said set (B1, B3);
**characterized in that**:
- these elements are configured to acquire, by means of one or more first sensors of said set (B2), a first image (I1) having a first field of view comprising the projection on the ground of the optical axis of the instrument and delimited by a first field edge and, by means of one or more second sensors (B1, B3) of said set, a second image (12) having a second field of view extending beyond the first field edge; and **in that**:
- the pixels of the second sensor or sensors have dimensions greater than those of the pixels of the sensor or sensors used for the acquisition of the first image.

11. Image acquisition system suitable for implementing a method according to one of Claims 6 or 7, comprising:
- a space or airborne segment comprising an optical instrument according to one of Claims 8 to 10, and a transmission device (TX) suitable for transmitting to the ground, samples forming a first image and a second image acquired by said instrument, said second image having a field of view extending beyond an edge of the field of view of the first image and being sampled spatially with at least one sampling step greater than that of the first image; and
- a ground segment comprising a reception device (RX) suitable for receiving said samples and a data processing system (STD) suitable for:
- upsampling said second image to a sampling step equal to that of the first image,
- obtaining, from the first image and from the upsampled second image, a single image (ImF) having a uniform sampling step and comprising a first region corresponding to said first image and a second region corresponding to the part of said second image which is not superimposed on said first image.
